# EUROPEAN PATENT APPLICATION

(11) **EP 4 851 080 A1**
(43) Date of publication of application: **09.12.2026**
(21) Application number: 25180125.4
(22) Date of filing: 02.06.2025
(51) Int. Cl.: B65G 54/02, G01D 5/14

(54) **MAGNETIC CONVEYOR, MAGNETIC CONVEYOR SYSTEM AND METHOD OF DETECTING A POSITION OF A MAGNETIC MOVER ON A MAGNETIC CONVEYOR**

(71) Applicant: Ginolis Oy, 90460 Oulunsalo (FI)
(72) Inventor: Mällinen, Juha, 90460 Oulunsalo (FI)
(74) Representative: Kolster Oy Ab

(57) **Abstract**

According to a first aspect of the invention, there is provided a magnetic conveyor comprising: a stationary track comprising a first side for moving a magnetic mover, an electromagnetic module coupled with the stationary track for generating magnetic fields for at least the first side of the stationary track and configured to control, with the magnetic fields, moving of the magnetic mover along the first side of the stationary track, at least one sensor arranged at a second side of the stationary track such that the electromagnetic module is substantially between the magnetic mover and the at least one sensor, and configured to detect at least a magnetic field vector of magnetic fields of the magnetic mover when the mover is on a sensing range of the at least one sensor, and a processing unit configured to determine a position of the magnetic mover in relation to the stationary track based on the at least detected magnetic field vector. Aspects of the invention relates also to a magnetic conveyor system and a method of determining a position of a magnetic mover.

## Description

### Field

The invention relates to a field of a magnetic conveyor, magnetic conveyor system and method of detecting a position of a magnetic mover on a magnetic conveyor.

### Background

Magnetic conveyors, such as linear conveyors, for moving a magnetic mover have been widely utilized in different automation lines for moving objects on a magnetic mover. The conveyors may comprise a stationary linear track for moving the magnetic movers by the magnetic fields generated within stationary linear track. On the stationary linear track, there may be a plurality of movers moving along the track. The magnetic movers may be utilized, for example, in moving manufacturing parts, electronic components and medicine to name a few. The magnetic movers may be called also as magnetic carriers. However, in known solutions, the location of the movers in relation to the track may not be accurately determined.

Hence, there is a need for a more sophisticated solution to alleviate the issues of the known solution.

### Brief description

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### List of drawings

Example embodiments of the present invention are described below, by way of example only, with reference to the accompanying drawings, in which
Figures 1a and 1b illustrate a magnetic mover according to embodiments of the invention; and
Figure 2a and 2b illustrate a magnetic conveyor and magnetic conveyor system according to embodiments of the invention;
Figure 3 illustrates an electromagnetic module of the magnetic conveyor and magnetic conveyor system according to embodiment of the invention;
Figure 4 illustrates a magnetic conveyor and magnetic conveyor system according to an embodiment of the invention; and
Figure 5 illustrates a method of determining a position of a magnetic mover on a magnetic conveyor according to an embodiment of the invention.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

Reference numbers, both in the description of the embodiments and in the claims, serve to illustrate the embodiments with reference to the drawings, without limiting them to these examples only.

According to a first aspect of the invention, there is provided a magnetic conveyor comprising a stationary track comprising a first side for moving a magnetic mover. An electromagnetic module coupled with the stationary track for generating magnetic fields for at least the first side of the stationary track and configured to control, with the magnetic fields, moving of the magnetic mover along the first side of the stationary track. At least one sensor arranged at a second side of the stationary track such that the electromagnetic module is substantially between the magnetic mover and the at least one sensor, and configured to detect at least a magnetic field vector of magnetic fields of the magnetic mover the mover is on a sensing range of the at least one sensor, and wherein a processing unit is configured to determine a position of the magnetic mover in relation to the stationary track based on the at least detected magnetic field vector.

Term "between" should be understood herein broadly so that it may mean "substantially between" or "partly between" or that it may be "absolutely between". The term "absolutely between" may refer to an arrangement, in which substantially no overlapping of parts takes place. Due to the electromagnetic module is substantially between the magnetic mover and the at least one sensor makes the arrangement substantially simple. Furthermore, despite the magnetic fields generated by the magnetic module is between the sensor and the mover, it has been surprisingly noticed, based on tests, that it is possible to detect and/or measure magnetic field vector(s) of the magnetic fields of the magnetic mover through the electromagnetic module for determining the position of the magnetic mover in relation to the stationary track.

The term "sensing range" refers to an area in which the sensor is able to measure/detect. In other words, the "sensing range" may be understood as a measuring range and/or detecting range. So, the "sensing range" may be understood as a measuring area and/or detecting area.

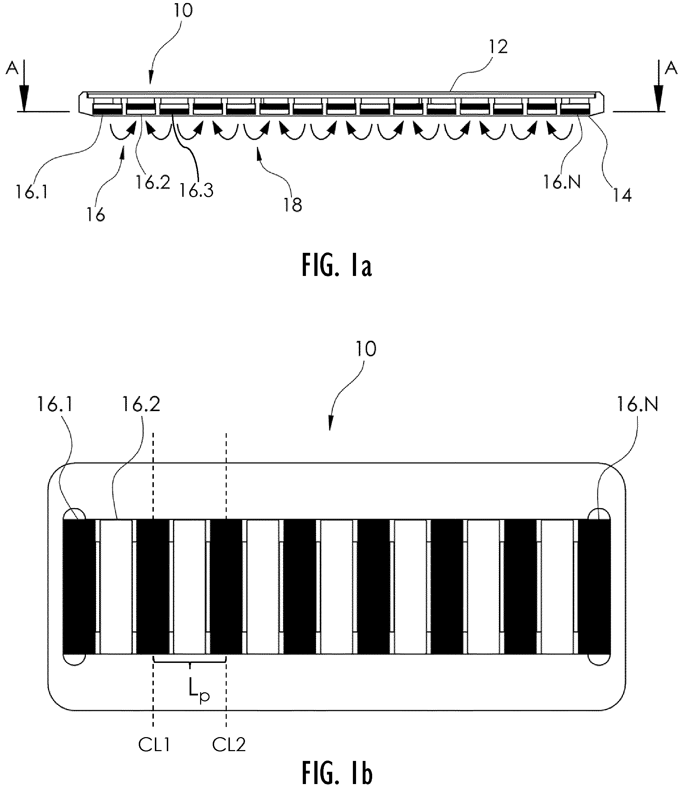

Referring now to Figure 1a that illustrates the magnetic mover 10 according to an embodiment. The magnetic mover comprises a first surface 12 and a second surface 14 opposite the first surface 12 of the magnetic mover 10. The first surface 12 and the second surface 14 may be substantially planar. The second surface 14 comprises a plurality of magnets 16, 16.1, 16.2, ..., 16.N. Each magnet 16, 16.1, 16.2, ..., 16.N may comprise two poles a first pole and a second pole as conventional. So, the first pole of the magnet 16 may be a North pole (N) and the second pole of the magnet 16 may be South pole (S). These two poles construct a pole pair which means same as magnetic field vector turns 360 degrees = 1 control / measurement rotation.

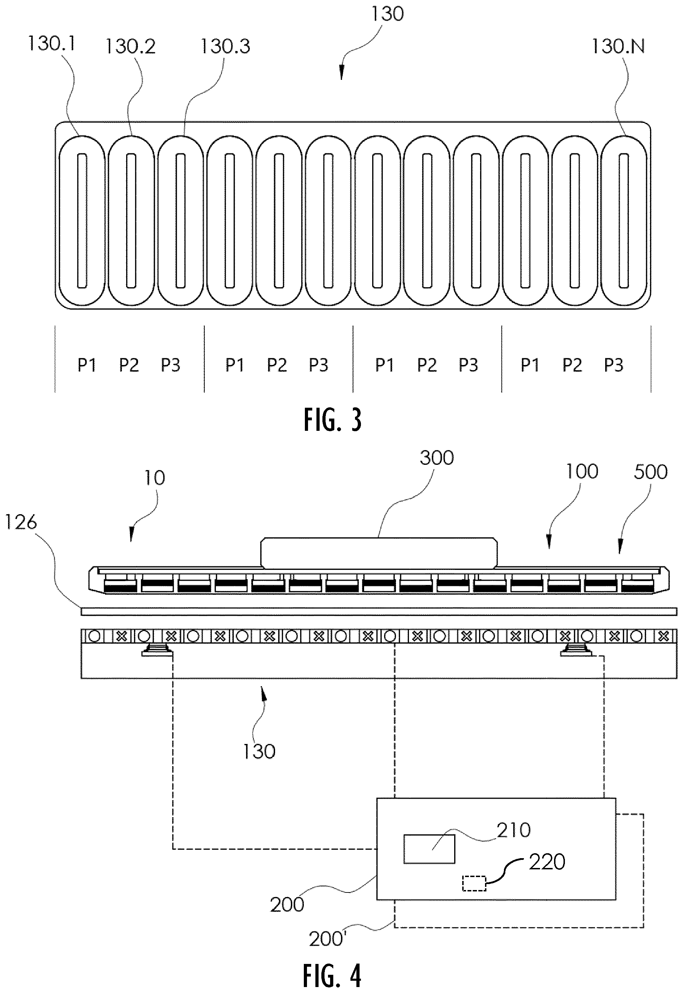

Figure 1b illustrates a (longitudinal) cross-section A-A of Figure 1a. When the magnetic mover 10 is in use, the cross-section A-A relates to a horizontal cross-section. As illustrated in embodiments of Figures 1a and 1b, the magnetic mover 10 comprises odd number of magnets. The magnets may be arranged longitudinally perpendicularly to the longitudinal direction of the magnetic mover. Side-by-side magnets (i.e. neighbouring magnets or adjacent magnets) are having opposite polarity facing each other. There may be a gap between the magnets, as illustrated schematically in Figure 1a and 1b. The magnets 16 may be arranged within the magnetic mover 10 perpendicular to the moving direction or perpendicular to the longitudinal axis of the magnetic mover 10. In other words, on the second surface 14 of the magnetic mover 10 N-poles and S-poles of the magnets alternate along the second surface. In Figures, N-pole is schematically drawn with black while S-pole is schematically drawn with white. For example, magnets of the first and second magnets 16.1 and 16.2 may be arranged such that N-pole of the first magnet 16.1 is neighbouring S-pole of the second magnet 16.2, as illustrated in Figure 1b. Every second magnet is having N-pole and the others (every second magnets) are having S-pole facing the stationary track 120 when in use. In other words, polarities alternate within the magnetic mover. Preferably, the magnets 16 within the magnetic mover are permanent magnets. The magnetic mover 10 may be called as palette, mover, linear mover, magnetic carrier or any combination of these without limiting to these. On top of the magnetic mover 10, for example, on the first surface 12, industrial items such as mechanical components may be put and carried, see Figure 4. Figure 1a also shows as examples of magnetic field directions with arrows 16. The magnetic mover 10 may be substantially free from sensors.

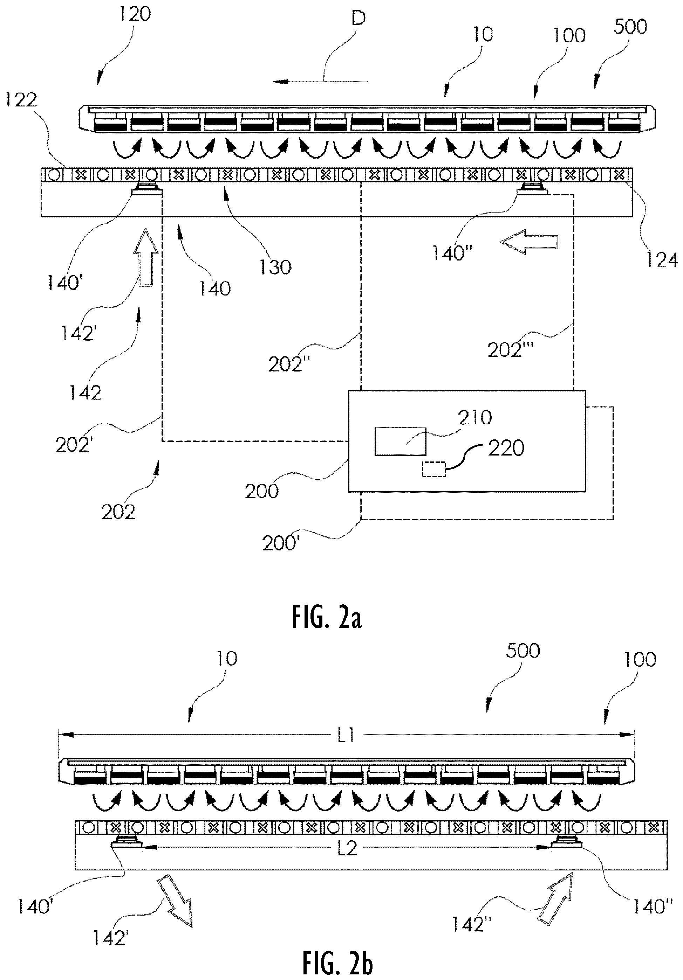

Referring now to Figure 2a which illustrates the magnetic conveyor 100 according to an embodiment of the invention. Figure 2a shows also the magnetic mover 10 arranged on top of the magnetic conveyor 100 for illustrating purposes (and it may not form a scope of the magnetic conveyor 100) and it serves to facilitate explanation of the embodiment. The magnetic mover 10 may be arranged to be moving directly on top of the magnetic conveyor 100 by sliding on it or alternatively moving by levitating on top of the magnetic conveyor 100. The second surface 14 of the magnetic mover that comprises magnets 16 are facing the first side of the stationary track. In other words, the magnetic mover 10 may be arranged to be moving directly on the first side 122 of the stationary track 120 or moving by levitating on the first side 122 of the stationary track 120. A gap between the stationary track 120 and the magnetic mover 10 is shown only for illustrative purposes only and may not be, by any means, in scale.

According to an embodiment, the stationary track is a linear stationary track comprising the first side for moving the magnetic mover linearly

According to an embodiment, the magnetic conveyor 100 comprises: the stationary track 120 comprising a first side 122 on to which the magnetic mover 10 is configured to be moving. In other words, the magnetic mover 10 may move on the stationary track 120. The electromagnetic module 130 coupled with the stationary track 120 for generating magnetic fields for at least the first side 122 of the stationary track 120 and configured to control, with the magnetic fields, moving of the magnetic mover 10 along the first side 122 of the stationary track 120. The at least one sensor 140, 140', 140" arranged at a second side 124 of the stationary track 120 such that the electromagnetic module 130 is substantially between the magnetic mover 10 and the at least one sensor 140, 140', 140", and configured to detect at least a magnetic field vector 142, 142', 142" of magnetic fields of the magnetic mover 10 when the mover is on a sensing range of the at least one sensor 140, 140', 140". A processing unit 200, 200' configured to determine a position of the magnetic mover 10 in relation to the stationary track 120 based on the at least detected magnetic field vector 142, 142', 142".

As illustrated in Figures 2a and 2b the at least one sensor 140, 140', 140" may be arranged at the second side 124 of the stationary track 120 which second side 124 is opposite the first side 122. The first side 122 may be the side onto which the magnetic mover is arranged to be moved. When the stationary track 120 is arranged at a substantially horizontally, the at least one sensor 140, 140', 140" may be arranged substantially underneath the first side 122, i.e. in the second side 124. In other words, the at least one sensor 140, 140', 140" may be arranged substantially below the first side 122. The at least one sensor 140, 140', 140" may be arranged substantially below the electromagnetic module 130. In yet another words, in response of the vertical direction, the electromagnetic module extending along substantially horizontal direction may be substantially between the magnetic mover when moving along substantially horizontal stationary track and the at least one sensor when in use. The stationary track may be arranged substantially horizontally.

When the mover is not on a sensing range of the sensor 140, 140', 140", the sensor 140, 140', 140" may indicate a zero (magnetic field vector is zero).

According to an embodiment, the at least one sensor 140, 140', 140" comprises a magnetic field sensor. In other words, the sensor may be a magnetic field sensor for measuring magnetic field vector, strength of the magnetic field and/or magnetic flux. So, the sensor may be configured to measure and/or detect a magnetic field vector, strength of the magnetic field and/or magnetic flux.

According to an embodiment, the sensor 140, 140', 140‴ measures and/or detects magnetic field vector.

As illustrated in Figures 2a and 2b the first side 122 is opposite the second side 124. In configuration shown in Figures 2a and 2b, the first side 122 may be a top side and the second side 124 may be a bottom side which the bottom side is opposite the top side. The magnetic mover 10 may be facing the first side 124 when the magnetic conveyor is in use.

Magnetic fields generated by the electromagnetic module 130 interact with the magnetic mover 10 which (magnetic fields) will make the magnetic mover 10 to move on the first side 122 of the stationary track 120. In other words, the magnetic fields generated by the electromagnetic module 130 drives the magnetic mover 10 in relation to the magnetic conveyor 100. When in use, the electromagnetic module 130 remains substantially stationary while the magnetic mover 10 is moving in response of the magnetic fields generated by the magnetic module 130.

Advantageously, by utilising magnetic field vectors in determining the position of the magnetic mover 10, the position of the magnetic mover 10 may be determined in relation to the stationary track 120 accurately and preferably without the need to monitor the magnetic fields therein. Furthermore, configuration of the magnetic conveyor 100 renders it possible to easily maintain and/or replace the one magnetic field sensor 140, 140', 140". In addition, magnetic field sensors 140, 140', 140" may be easily retrofitted to existing magnetic conveyors. Despite the electromagnetic module 130 generates magnetic fields, when the magnetic mover 10 passes by the at least one magnetic field sensor 140, 140', 140", magnets of the magnetic mover 10 overrides the magnetic fields generated by the electromagnetic module 130 so that magnetic field vectors or their changes may be detected by the at least one magnetic field sensors 140, 140', 140".

According to an embodiment, the magnetic conveyor 100 comprises a plurality of electromagnetic modules 130 arranged side-by-side so as to form a uniformly arranged plane. In other words, a space between the electromagnetic modules 130 may be minimal. In other words, the space between neighbouring electromagnetic modules may be substantially free from gaps. By this way it may be possible to obtain a uniform arrangement of electromagnetic modules 130 substantially free from gaps which renders it possible to generate magnetic fields for at least for the first side 122 of the stationary track 120. The plane formed at least with the electromagnetic modules 130 may form at least partly the stationary track 120 for the magnetic mover 10. Preferably between the neighbouring electromagnetic modules 130 there is neither magnetic field sensors 140 so as to hamper magnetic field generation on the first side of the stationary track 120. Namely, the magnetic field sensors may be preferably arranged such that the electromagnetic module 130 is between the magnetic mover 10 and the at least one magnetic field sensor 140, 140', 140". Thus, controlling, with the magnetic fields for moving of the magnetic mover 10 along the first side 122 of the stationary track 120 may be even more accurate.

When the magnetic conveyor is in use and the stationary track 120 may be arranged substantially horizontally, the at least one magnetic field sensor 140, 140', 140" may be arranged underneath the electromagnetic module 130 as illustrated in Figure 2a. In such a way, the at least one magnetic field sensor 140, 140', 140" detects the magnetic field vector 142, 142', 142" in response of the moving magnetic mover 10 through the electromagnetic module 130.

In Figure 2a, the magnetic conveyor 100 comprises two magnetic field sensors 140: a first magnetic field sensor 140' and the second magnetic field sensor 140". The first magnetic field sensor 140' indicates a magnetic field vector pointing towards the magnetic mover 10 while the second magnetic field sensor 140" indicates a magnetic field vector pointing in direction as a moving direction D of the magnetic mover 10. As can be seen, the magnetic mover 10 has one magnetic pole of the magnet of the magnetic mover 10 arranged aligned with the magnetic field sensor 140. In addition, magnetic fields 18 of the magnetic mover 10 points towards substantially centre of the magnetic pole therebetween which is aligned with the magnetic field sensor. Since the magnetic field directions point such a way, also detected magnetic field vector 142' is pointing on the same direction.

Correspondingly, as can be seen, none of the magnetic poles of the magnet of the magnetic mover 10 is arranged aligned with the magnetic field sensor 140. In addition, magnetic field 18 of the magnetic mover 10 (in the middle part of the magnetic field vector) points towards substantially to a same direction as the magnetic mover is moving. Since the magnetic field direction points such a way, also detected magnetic field vector 142" of the second magnetic field sensor 140" is pointing on the same direction, as illustrated. In other words, the at least one magnetic field sensor is configured to detect at least the magnetic field vector, or in other words, magnetic field direction rather than strength in relation to the magnetic mover 10 when it moves on the first side of the stationary track 120. This way it renders possible to determine the position of the magnetic mover 10 related to the electromagnetic module 130. In other words, it possible to determine the position of the magnetic mover 10 related to the coils 130.1, ..., 130.N of the electromagnetic module 130. Determining (only) the magnetic mover position related to coils, it is possible to control optimal control phasing setup from a control unit to the coils. In addition, positioning of the magnetic mover may be either estimated by a pole pair counter 220 of the magnetic mover for counting changes of directions of magnetic field vectors from one direction to another direction or measuring position of the magnetic mover, by using, for example, at least one optical sensor in the application defined interval. The at least one optical sensor may be arranged at a predetermined location for detecting movement of the magnetic mover. When the magnetic mover passes by the at least one magnetic field sensor (such as Hall sensor), its location is detected in relation to the stationary track. In other words, the magnetic mover passes by the at least one magnetic field sensor (such as Hall sensor), its location is detected in relation to the corresponding magnetic field sensor. Thus, it may be known within one of the areas of one pole pair of the magnetic mover in which location the magnetic mover is. The location of the magnetic mover can be deduced with the at least one magnetic field sensor. The pole pair counter 220 of the magnetic mover may refer to that a location of the magnetic mover may be deduced in response to a first measurement received from a front (leading) edge of the magnetic mover by the magnetic field sensor (such as Hall sensor). A first event when the magnetic mover 10 is in the sensing area of the at least one sensor 140, 140', 140‴ may be detected and/or events when the magnetic mover 10 remains (moves) within the sensing area of the at least one sensor 140, 140', 140"'. So, the pole pair counter 220 of the magnetic mover may count changes from one polarity (magnetic field vector direction) to another polarity (magnetic field vector direction) when the magnetic more 10 is within the sensing area of the at least one sensor 140, 140', 140‴ to deduce how long distance is travelled from the point when the magnetic field sensor got its first measurement from the magnetic mover. For determining the position of the magnetic mover 10 in relation to the corresponding sensor 140, 140', 140‴ (or generally to the stationary track 120), information of the distance of the magnets within the magnetic mover and counted changes detected by the pole pair counter 220 of the magnetic mover may be used to calculate the distance travelled (and so location of the magnetic mover 10 in relation to the stationary track 120). In other words, the location of the magnetic mover in relation to the stationary track is then known. In this particular case, the measure of the one pole pair position of the magnetic mover enables enough time to detect the magnetic mover. The pole pair counter 220 is illustrated in Figure 2a with dashed box.

The pole pair counter 220 may, in other words, count rotations of magnetic field vector during the magnetic mover 10 moves within the sensing range of the sensor. One rotation (360°) of the magnetic field vector may be defined when the magnetic mover 10 has moved within the sensing range of the sensor so that magnetic mover's detected polarity (sensed direction of the magnetic field vector by the sensor) has changed from a predetermined polarity via the opposite polarity back to the predetermined polarity, for example, N-pole to S-pole to N-pole when the magnetic mover moves forward on the stationary track. In other words, one rotation (360°) may be defined as the distance of one pole pair. The method and/or the magnetic conveyor may comprise instructions to count rotations of the magnetic field vector when the magnetic mover moves along the stationary track within the sensing area of the sensor 140, 140', 140".

According to an embodiment, a measure (length Lₚ) of one pole pair of the magnetic mover is based on the distance between the magnets of the magnetic mover from a first magnet (having e.g. N pole) of the magnetic mover to another magnet of the magnetic mover having the same magnetic pole (having e.g. N pole). For example, the length of the pole pair of the magnetic mover may be in Figure 1a and/or 1b from a first magnet 16.1 to the third magnet 16.3. In other words, the second magnet 16.2 is between the first magnet 16.1 and the third magnet 16.3, So, the length of the pole pair Lₚ may be measured from the centre of the first magnet to the centre of the third magnet. In Figure 1, the measurement is conducted on a horizontal plane. Referring to Figure 1b, the length of one pole pair Lₚ of the magnetic mover is shown as the measure between the neighbouring magnets that has same polarity. In other words, one magnet having different polarity is between two of the magnets having same polarity when measured by the at least one sensor, such as, magnetic field sensor. As illustrated in Figure 1b, the length Lₚ may be defined from a longitudinal centre line CL1 of a magnet having a first polarity to a longitudinal centre line CL2 of a closest magnet having the first polarity. Or the length Lₚ may be defined from a longitudinal edge of a magnet having a first polarity to a longitudinal edge of a closest magnet having the first polarity. In other words, one magnet may be located between the length Lₚ. Alternatively, the length Lₚ may be defined from a longitudinal centre line CL1 of a magnet having a first polarity to a longitudinal centre line CL2 of another magnet having the first polarity. In such a case, more than one magnet may be located between the length Lₚ. The length Lₚ of the one pole pair of the magnetic mover may be defined as widths of two magnets within the magnetic mover. In other words, measure (width) of two magnets within the magnetic mover. The pole pair may be defined as distance of two adjacent (or neighbouring) magnets (one magnet having polarity N and the other magnet having polarity S).

According to an embodiment, the at least one sensor is a magnetic field sensor for measuring the magnetic field vector of the magnetic mover.

According to an embodiment, the at least one sensor is a magnetic field sensor that is a Hall-sensor for measuring the magnetic field vector of the magnetic mover.

According to an embodiment, the at least one sensor is a magnetic field sensor that is a fluxgate magnetometer for measuring the magnetic field vector of the magnetic mover.

According to an embodiment, the at least one sensor is a magnetic field sensor comprising at least one of a Hall sensor and/or fluxgate magnetometer for measuring the magnetic field vector of the magnetic mover.

Referring to Figure 2b, the magnetic mover 10 has moved (compared to the position in Figure 2a) towards the left-hand-side. In this example, the first magnetic field sensor 140' detects a (first) magnetic field vector 142' pointing different direction as in Figure 2a since the position of the magnetic mover 10 in relation to the electromagnetic field module 130 or the magnetic field sensor 140 is different than in Figure 2a. Correspondingly, the second magnetic field sensor 140" detects a (second) magnetic field vector 142" pointing different direction as in Figure 2a since the position of the magnetic mover 10 in relation to the electromagnetic field module 130 or the magnetic field sensor 140 is different than in Figure 2a.

Referring now to Figure 2a that illustrates that there may be a plurality of connection circuits, lines or conduits 202, 202', 202", 202" between the components of the stationary track 120, electromagnetic module 130, and magnetic fields sensors 140, 140', 140" and components therein are configured to transferring, for example, at least one of information, instructions, control signals, measurement signals, data or electricity with the processing unit 200, 200'. There may be one or more processing units 200, 200' as illustrated schematically in Figure 2a in which the optional one with a reference 200' is illustrated with dash-dotted lines.

By controlling the magnetic field of the electromagnetic module 130 will affect moving of the magnetic mover 10 along the stationary track 120. In other words, the stationary track 120 remains in one position (substantially stationary/still) while the mover 10 is moving on it in response of the caused magnetic field(s) generated on the magnetic module 130 in a conventional manner (as known that same poles (e.g., N-N or S-S) of magnets repels each other while different poles (N-S or S-N) attracts each other. Thus, by interaction with the magnetic fields generated by the magnetic module 130, the magnetic mover 10 moves on the first side 120 of the magnetic conveyor 100.

According to an embodiment of the invention, the stationary track 120 is a linear stationary track comprising the first side 122 on to which the magnetic mover 10 is configured to be moving linearly. So, the stationary track is a linear stationary track comprising the first side for moving the magnetic mover linearly. In other words, the magnetic mover 10 may move linearly on the first side 122 of the linear stationary track 120. Then, the magnetic conveyor 100 may be called as a magnetic linear conveyor. In other words, the working principle of the magnetic conveyor may be considered to resemble like a single side linear motor.

Referring to figures 2a and 3, according to an embodiment, the electromagnetic module 130 comprises coil units 130.1, ..., 130.N. Each of the coil unit may comprise a phase P1, P2 and P3. The phases P1, P2 and P3 may differ from each other. The angle of each phases, currents and magnetic field of each phase may be changed by the processing unit 200, 200'. This causes changed magnetic force to magnetic mover 10 and it moves along the first side of the stationary track 120. Referring to Figure 2a, symbols "X" or "O" on the coils of the electromagnetic module 130 represents coil direction.

According to an embodiment, every fourth magnet repeats angularity on same position for the phase P1, P2 or P3 when in use. In other words, in Figure 2a, it is illustrated schematically that the first magnet, the fifth magnet and ninth magnets repeat angularity on the same phase P1. So, the phase P1, P2, P3 of the electromagnetic module 130 and the magnetic mover 10 may be designed in interrelated relationship with arrangement of phases (coils) and magnets.

Referring now to Figure 3, according to an embodiment, the electromagnetic module comprises coil units for generating the magnetic fields.

According to an embodiment, the electromagnetic module 130 comprises a plurality of coil units 130.1, 130.2, 130.3, ..., 130.N arranged side by side and each having a controllable phase P1, P2, P3. In other words, phases of sinusoidal currents are delayed with respect to each other. In other words, alternating currents. Figure 3 also illustrates three electromagnetic modules 130. In practice the number of phases, coils and electromagnetic modules 130 may vary depending on the application. Distance of coil loops of one phase P1, P2, P3, in horizontal direction, may be greater than the width of one magnet of the magnetic mover 10.

According to an embodiment, the electromagnetic module 130 comprises at least three coil units 130.1, 130.2, 130.3 arranged side by side and each having a controllable phase P1, P2, P3. In other words, three phases of the sinusoidal currents are delayed with respect to each other. Controlling each of the phases generates magnetic fields which interact with the magnetic mover 10 so that the magnetic mover 10 moves on the stationary track 120. In other words, the electromagnetic module 130 is configured to interact with the magnetic mover 10 so as to move the magnetic mover 10 on the stationary track 120. In other words, the magnetic mover 10 moves due to the attractive and repulsive forces generated by the electromagnetic module 130. In other words, alternating current in the phases P1, P2 and P3 generated by the electromagnetic module 130 creates magnetic fields to interact with the magnetic mover 10 so that the magnetic mover travels along the stationary track 120.

According to an embodiment, a control unit in connection with the processing unit is arranged to control phases of coil units for generating the magnetic fields. The processing unit may comprise the control unit as illustrated in Figure 2. Alternatively, the control unit may be a separate unit connected, e.g. with wiring or conduits, with the processing unit. The processing unit may calculate the phases in required time intervals, for example, from nanoseconds to microseconds. The processing unit may calculate the phases and pole pair positions within the intervals of about 200µs. The processing unit may calculate the phases within the intervals of about 100µs or about 50µs. The processing unit may calculate the phase and pole pair position within the interval range of about 50 µs to about 400 µs.

According to an embodiment, the at least one magnetic field sensor is arranged in a planar direction of the stationary track between two of the coil units for measuring the magnetic field vector of the magnetic mover through the coils. The planar direction may be understood as the longitudinal direction and/or a moving direction of the magnetic mover when moving on the stationary track. In other words, the magnetic field sensor may be arranged at least partially within the area which is substantially free from coils. However, as illustrated preferably, the electromagnetic module is between the magnetic mover and the at least one magnetic field sensor. In figures, the at least one magnetic field sensor is arranged at least partly between two of the coil units in a horizontal direction (or, in other words, in direction of a plane of the electromagnetic module or, in other words, in the direction of a plane of the moving of the magnetic mover) for measuring the magnetic field vector of the magnetic mover through the coils. Alternatively, however, it may be possible that the sensor is directly underneath the coils, when in use. In other words, the at least one sensor 140, 140', 140" may be arranged substantially below the coils. The electromagnetic module may be substantially between the magnetic mover and the at least one sensor in response of the vertical direction when in use, for example, when the stationary track is arranged substantially horizontally. The effect of magnetic fields of coils to the at least one sensor may be taken into account during calibration so that the magnetic fields of coils may not hamper measurements of the at least one sensor.

According to an embodiment, the at least one sensor is arranged underneath at least one of the coil units for measuring the magnetic field vector of the magnetic mover through the coils. So, in other words, when the stationary track is in use, the at least one sensor is arranged underneath at least one of the coil units for measuring the magnetic field vector of the magnetic mover.

According to an embodiment, the at least one magnetic field sensor comprises a Hall sensor. The Hall sensor may also be called as a Hall effect sensor. In other words, the at least one sensor is a magnetic field sensor that comprises a Hall sensor for measuring the magnetic field vector of the magnetic mover. The Hall sensor comprises at least one Hall element. The Hall sensors may be 2D (two-dimensional) and/or 3D (three-dimensional) Hall sensors. In other words, the magnetic field vector may be of the form **B** = (Bₓ, B_{y}) for a two-dimensional case where Bₓ refers to magnetic field vector component in respect of x-direction, and B_{y} refers to magnetic field vector component in respect of y-direction or **B** = (Bₓ, B_{y}, B_{z}) for a three-dimensional case where Bₓ refers to magnetic field vector component in respect of x-direction, B_{y} refers to magnetic field vector component in respect of y-direction and B_{z} refers to magnetic field vector component in respect of z-direction.

According to another aspect of the invention, there is provided a magnetic conveyor system 500 comprising a magnetic conveyor 100 according to embodiments as described earlier comprising at least one magnetic mover 10.

According to an embodiment, the at least one magnetic mover 10 comprises an odd number of magnets side by side having opposite polarity.

According to an embodiment, the at least one magnetic mover comprises an odd number of magnets side by side arranged such that side by side magnets have opposite polarity in respect to each other. The magnetic mover may be substantially free from sensors.

According to an embodiment, the at least one magnetic mover 10 moves on the first side 122 of the stationary track 120.

According to an embodiment, the at least one magnetic mover 10 moves on the first side 122 of the stationary track 120 such that a second surface 14 of the magnetic mover 10 takes contact with the first side 122 of the stationary track 120. In other words, the magnetic mover 10 may slide along the first side 122 of the stationary track 120. It may be possible that the magnetic mover 10 may move rotatably on a plane defined by the stationary track 120 or the magnetic mover 10 may move linearly on the plane defined by the stationary track 120. In case of the linear stationary track 120, it may comprise guide walls between which the magnetic mover 10 may move linearly. In other words, the guide walls may form a part of the linear stationary track 120.

According to an embodiment, the at least one magnetic mover 10 moves by levitating on the first side of the stationary track 120. When levitating on the first side of the stationary track 120, the magnetic mover 10 may not take contact with the stationary track 120. In other words, levitating means that there may be substantially an air gap between the magnetic mover 10 and the first side of the stationary track 120.

According to an embodiment, the at least one magnetic mover 10 moves by levitating or sliding on the first side 122 of the stationary track 120.

Referring to Fig. 2b, according to an embodiment, at least two magnetic field sensors are arranged within a distance L2 to each other in the longitudinal direction of the stationary track 120 and wherein the distance L2 between the at least two of the magnetic field sensors 140', 140" is smaller than a length L1 of the magnetic mover 10. In other words, the distance L2 from a first magnetic field sensor 140' to a second magnetic field sensor 140" may be defined along the longitudinal direction of the stationary track 120. Referring to Figure 2a, for example, the length L2 may be defined in relation to the magnetic mover 10 so that when the first magnetic field sensor 140' is aligned with one of the magnets of the magnetic mover 10, preferably so that the centres of the magnet and the first sensor is aligned in vertical line. While at the same time the second magnetic field sensor 140' is substantially aligned with the middle point of two of the magnets. In other words, the second magnetic field sensor detects magnetic field vector in response to the middle of two magnets. The length L1 of the magnetic mover 10 may be defined along the longitudinal length of the magnetic mover 10. The length L1 of the magnetic mover 10 may be defined along a moving direction of the magnetic mover 10.

The distance L2 between two of the magnetic field sensors may be longer than a length of the magnetic module 130. The length of the magnetic module 130 may be defined along the longitudinal direction of the stationary track 120. It may be possible that between the first magnetic field sensor 140' and the second magnetic field sensor 140" is arranged at least one electromagnetic module 130. In other words, it may be possible that only a portion of the electromagnetic modules 130 comprises magnetic field sensors 140, 140', 140".

Referring to Figure 4 which illustrates an embodiment in which between the electromagnetic module 130 and the magnetic mover 10 is arranged a surface 126. The surface 126 may be called as a surface element. The surface may be a plate-like element and/or substantially planar element. The surface 126 may be a separate element or integrated with the electromagnetic module 130. In other words, the electromagnetic module 130 may be embedded at least partly within the surface. On the surface 126, the magnetic mover 10 is configured to be moved. In other words, the magnetic mover may be moving directly on the surface 126 or it may be levitating above the surface 126.

According to an embodiment, the first side 122 of the stationary track 120 may comprise surface 126. Between the electromagnetic module 130 and the magnetic mover 10 is arranged a surface 126. In other words, the surface 126 may be arranged on top of the electromagnetic module 130. Still in other words, the surface 126 may form the first side 122 of the stationary track 120 on which the magnetic mover 10 may slide or levitate. The surface 126 may be fixed non-movably on the electromagnetic module 130, for example, by gluing or with fixing means.

According to an embodiment, the surface 126 is made of non-magnetizable material. In other words, the material of the surface may be substantially any material that does not interact with the magnetic field. Preferably the surface 126 has a relatively small friction coefficient. The surface 126 may comprise plastic, plexiglass, and/or glass to name a few preferable examples. The glass may be a chemically strengthened glass, for example, alkali-aluminosilicate sheet glass. Such alkali-aluminosilicate sheet glass may be commercial glass, such as, Gorilla^{®} glass. Furthermore, in case the magnetic mover 10 moves substantially directly on the surface 126, it is preferred that the surface 126 is substantially smooth and/or small surface energy so as to have adequate small friction factor (coefficient). In other terms, the magnetic mover 10 may slide on the surface 126 of the magnetic conveyor 100. Preferably the second surface 14 of the magnetic mover 10 has substantially smooth surface as well. The thickness of the surface 126 may be between a range of about 0.5mm to about 1.2mm or about 0.6mm to about 1.1mm, or about from 0.7 to about 1.0mm. Preferably, the thickness of the surface 126 may be less than 1mm. Even more preferably, the thickness of the surface 126 may be about 0.8mm or less.

Figure 4 illustrates schematically a portion of the magnetic conveyor or magnetic conveyor system within an automation line according to an embodiment in which an item 300 is placed on top of the magnetic mover 10. In an embodiment, the magnetic sensors 140, 140', 140" may be arranged in such a portion in which parts are assembled (or placed) on top of the magnetic mover 10. In such a circumstance it is important to notice (be aware about) whether the magnetic mover 10 is in a correct position so that the item 300 may be placed on top of it. When the magnetic mover is coming on such a place (for example called as an assembly place), its speed is decelerated, and it is stopped so that item may be placed on top of the magnetic mover 10. When the item is on the magnetic mover, the magnetic mover 10 continues its journey carrying the item, and the magnetic mover accelerates and continues with a substantially constant speed until it comes on the second place in which the item 300 is taken off from the magnetic mover or some other item is placed on the magnetic mover 10.

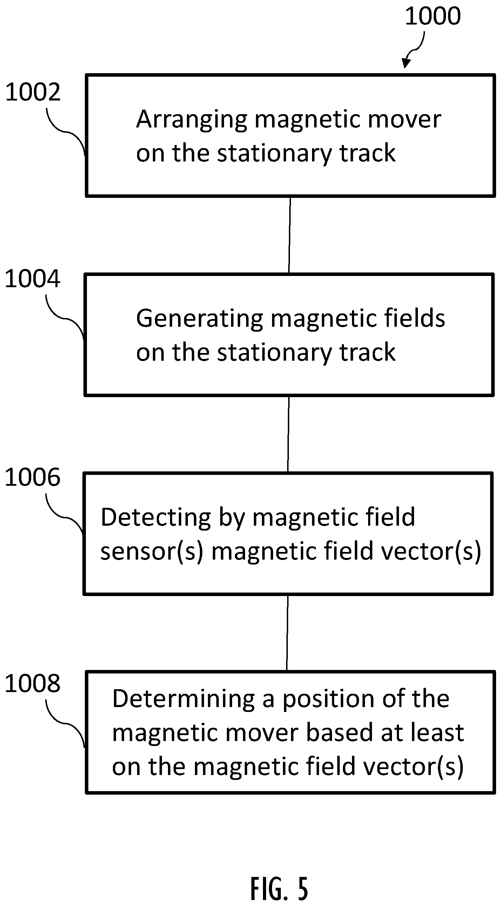

Referring to Figure 5, according to another aspect of the invention, there is provided a method 1000 of determining a position of a magnetic mover 10 on a magnetic conveyor 120. The method comprises at least the following steps. Arranging 1002 the magnetic mover 10 on a first side 122 of a stationary track 120 to be moving. Generating 1004, by the electromagnetic module 130, magnetic fields at least on the first side 122 of the stationary track 120 for moving the magnetic mover 10 along the first side 122 of the stationary track 120. Detecting 1006, by at least one sensor 140, 140', 140" arranged at a second side 124 at least a magnetic field vector 142, 142', 142" of magnetic fields of the magnetic mover 10 when the mover 10 is on a sensing range of the at least one sensor. Determining 1008, by a processing unit 200, the position of the magnetic mover 10 in relation to the stationary track 120 based on the at least detected magnetic field vector 140, 140', 140".

According to an embodiment, the magnetic fields are generated by coil units 130.1, 130.2, 130.3, ..., 130.N of the electromagnetic module 130.

According to an embodiment, control phases of the electromagnetic module 130 are changed by a control unit 210 in connection with the processing unit 200 in response of the position of the magnetic mover in relation to the stationary track based on the at least detected magnetic field vector. In addition to the magnetic field vector, control phase may be changed in relation to velocity of the magnetic mover 10. The term control phase relates to a phase which control movement of the magnetic mover 10 on the stationary track 120.

According to an embodiment a step of determining, by a processing unit, the position of the magnetic mover in relation to the stationary track based on the at least detected magnetic field vector and information from a pole pair counter 220 which detects how many pole pairs of the magnetic mover has passed the at least one sensor. In other words, the pole pair counter 220 of the magnetic mover may detect how many times the polarity change (by the at least one sensor) takes place. So, in other words, the pole pair counter 220 of the magnetic mover may be called as polarity phase counter of the magnetic mover. The pole pair counter 220 of the magnetic mover may be arranged at one of the processing unit 200, 200'. In other words, the at least one processing unit 200, 200' may comprise the pole pair counter 220 of the magnetic mover 10.

Detection, by at least one magnetic field sensor arranged at a second side at least a magnetic field vector in relation to the magnetic mover when moving on the first side of the stationary track may be conducted by measurements with the at least one magnetic field sensor. Data related to measurements the at least one magnetic field sensor may comprise vector values related to the magnetic field vector field. Referring to Figures 2a, the first magnetic field sensor 140' may record a first magnetic field vector value and the second magnetic field sensor 140" may record the second magnetic field vector value. Utilizing these two values, the position (or in other words, location) of the magnetic mover 10 may be deduced. In case there are a plurality of magnetic field sensors for detecting magnetic field vectors, then utilization of these vectors, the position (location) of magnetic mover in relation to the stationary track may be deduced. Deduction may be based on a mathematical model such as sum of the detected magnetic field vectors, subtraction of the detected magnetic field vectors multiplication of the detected magnetic field vectors or convolution of the detected magnetic field vectors or any combination of these. In case one of the magnetic field sensors 140, 140', 140" is not detecting any magnetic field vector (i.e., the vector value is zero), it may mean that there is no magnetic mover aligned with that specific magnetic field sensor 140, 140', 140". Depending on the location of the magnetic field sensor this (zero valued vector) may mean that the magnetic mover 10 has already passed by the sensor or the magnetic mover 10 has not yet reached the magnetic field sensor 140, 140', 140"'. It may even be possible that detected magnetic field vectors are compared to predetermined values to determine the position of the magnetic mover 10. The predetermined values may be based on earlier measurements of moving of the magnetic mover on the stationary track. The predetermined values may comprise a certain error margin and/or safety margin.

According to an embodiment, calibration is conducted by setting the magnetic mover on the stationary track and giving a predetermined control phase as a control command for moving the magnetic mover on the stationary track. It is possible to choose, for example, two to three different predetermined control commands and collecting into a calibration table value from the magnetic field sensor (such as from the Hall sensor). When the position of the magnetic field sensor, for example, Hall-sensor, in relation to the stationary track is predetermined, it is possible to improve accuracy of the detection when utilizing more than one magnetic field sensors. For such a case, it may be possible to take mean values of the measurements of the one or more magnetic field sensors. Another possibility may be a weighted mean value of measurements of the one or more magnetic field sensors. In practice, the magnetic field sensors are located such that their distance in response to each other is less than the longitudinal length of the magnetic mover. The longitudinal length of the magnetic mover refers to direction of the flow of the magnetic mover, for example, when the magnetic mover moves linearly along the stationary track. So, in the working area of the magnetic mover on the stationary track. In case there are two working areas for the magnetic mover, for example a first working area on a first stationary track and a second working area at a second stationary track. When the magnetic mover is moved from the first working area to the second working area, then it may be possible to arrange only one magnetic field sensor between the working areas. Accuracy requirements between the working areas are smaller. In other words, the working area may be defined as a specific area on the stationary track.

Assume now that the magnetic mover has a length at least seven times the length Lₚ of the phase of the magnetic mover. In other words, there are 15 magnets side by side within the coil in a horizontal direction as depicted, in Figures. Assume that the magnetic mover 10 moves from right to left in Figures. At first, front edge of the magnetic mover 10 will reach the second sensor 140" which measures the magnetic field vector. It is then known the magnetic field vector (and/or angle of the field vector) and location of the magnetic mover 10. Accuracy of the detection of the location of the magnetic field mover is based on the magnet intervals. In this case the accuracy is Lₚ. Assume that the magnetic mover 10 is to be moved 3*Lₚ + 0,5mm towards left from the location in which the front edge of the magnetic mover 10 is located at an area of the second sensor 140". Phases P1, P2, P3 need to be controlled so as to move the magnetic mover 10 along the stationary track 120. When the magnetic mover is controlled so that the distance 3*Lₚ is reached from right to left, the magnetic field vector detected by the second sensor 140" is substantially at the same value as in the beginning when the front edge of the magnetic mover 10 was on the sensing area of the second sensor 140". It should be noted that the magnetic mover needs still to be moved 0,5 mm to the left. After that movement, the magnetic field vector detected by the second sensor 140" is different than the one detected at the beginning.

According to an embodiment, the processing unit comprises instructions to keep track on how many times the magnetic field vector is pointing at a predetermined direction. The processing unit comprises instructions to record a number of events when the magnetic field vector is pointing at a predetermined direction. In other, the processing unit may keep track, or in other words, count the phase of the magnetic mover. The pole pair counter of the magnetic mover may keep track on how many times the magnetic field vector is pointing at a predetermined direction. So, the processing unit may comprise the pole pair counter of the magnetic mover that may count changes from one polarity (magnetic field vector direction) to another polarity (magnetic field vector direction) to deduce how long distance the magnetic mover has travelled from the point when the magnetic field sensor got its first measurement from the magnetic mover. For such, information of the distance of the magnets within the magnetic mover may be used to calculate the distance travelled (and so location of the magnetic mover 10 in relation to the stationary track 120). So, the location of the magnetic mover in relation to the stationary track is then known. In other words, the processing unit may comprise the pole pair counter configured to detect change of magnetic field vector from a first predetermined position (vector direction) to a second predetermined position (vector direction) and count such changes of polarity and take into account distances between the magnets to calculate the travelled distance in relation to the at least one magnetic field sensor. So, when, for example, the first Hall-sensor 140' detects the predetermined magnetic field vector when the magnetic mover has come into the sensing area, the pole pair counter starts to record changes in polarity while magnetic mover moves along the stationary track, and based on the recorded changes and information on the magnet distances from each other, the location of the magnetic mover in relation to the first Hall-sensor (or in other words, in relation to the stationary track 120) is then deduced.

According to an embodiment the magnetic conveyor comprise the pole pair counter configured to detect change of magnetic field vector from a first predetermined vector direction to a second predetermined vector direction when the magnetic mover moves along the stationary track. The first predetermined vector direction may be same as the second predetermined vector direction. Such information on changed polarities (based on the detected magnetic field vector(s)) together with the knowledge of distances of magnets within the magnetic mover may be used to determine the position of the magnetic mover in relation to the stationary track based on the at least detected magnetic field vector.

According to an embodiment, the method comprises a step to record a number of events, by the processing unit, when the magnetic field vector is pointing at a predetermined direction and based on the at least detected magnetic field vector and the number of events to determine, by the processing unit, the position of the magnetic mover in relation to the stationary track. In other words, the method comprises a step to record a number of events, by the processing unit, when the magnetic field vector is pointing at a predetermined direction while the magnetic mover is moving within the sensing area of the at least one magnetic field sensors, and based on the at least detected magnetic field vector and the number of events and the distance of magnets within the magnetic mover, to determine, by the processing unit, the position of the magnetic mover in relation to the stationary track 120.

According to an embodiment the stationary track 120 is a closed loop. In other words, the track may form a loop in which the magnetic mover 10 may be looped along the track. According to an embodiment, the stationary track may comprise a loop counter to count the laps of the magnetic mover. The loop counter may be the pole pair counter of the magnetic mover. Alternatively, the magnetic conveyor may comprise a loop counter and the phase counter of the magnetic mover. In addition, the magnetic conveyor may comprise information on how many magnetic movers are traveling along the stationary track when in use which information may be taken into account when detecting laps of the magnetic mover(s).

It will be obvious to a person skilled in the art that, as technology advances, the inventive concept can be implemented in various ways. The invention and its embodiments are not limited to the example embodiments described above but may vary within the scope of the claims.

## Claims

1. A magnetic conveyor comprising:
a stationary track comprising a first side for moving a magnetic mover;
an electromagnetic module coupled with the stationary track for generating magnetic fields for at least the first side of the stationary track and configured to control, with the magnetic fields, moving of the magnetic mover along the first side of the stationary track;
at least one sensor arranged at a second side of the stationary track such that the electromagnetic module is substantially between the magnetic mover and the at least one sensor, and configured to detect at least a magnetic field vector of magnetic fields of the magnetic mover when the mover is on a sensing range of the at least one sensor; and
a processing unit configured to determine a position of the magnetic mover in relation to the stationary track based on the at least detected magnetic field vector.

2. The magnetic conveyor of claim 1, wherein the stationary track is a linear stationary track comprising the first side for moving the magnetic mover linearly.

3. The magnetic conveyor of any preceding claims, wherein the electromagnetic module comprises coil units for generating the magnetic fields.

4. The magnetic conveyor of claim 3, wherein the electromagnetic module comprises at least three coil units arranged side by side and each having a controllable phase.

5. The magnetic conveyor of any claims 3-4 wherein a control unit in connection with the processing unit is arranged to control phases of coil units for generating the magnetic fields.

6. The magnetic conveyor of any of claims 3-5, wherein the at least one sensor is arranged underneath at least one of the coil units for measuring the magnetic field vector of the magnetic mover through the coils.

7. The magnetic conveyor of any of preceding claims, wherein the at least one sensor is a magnetic field sensor comprising at least one of a Hall sensor and/or fluxgate magnetometer for measuring the magnetic field vector of the magnetic mover.

8. A magnetic conveyor system comprising a magnetic conveyor of any preceding claims and at least one magnetic mover.

9. A magnetic conveyor system of claim 8, wherein the at least one magnetic mover comprises an odd number of magnets side by side arranged such that side by side magnets have opposite polarity in respect to each other.

10. A magnetic conveyor system of claims 8-9, wherein the at least one magnetic mover moves on the first side of the stationary track such that a second side of the magnetic mover takes contact with the first side of the stationary track.

11. The magnetic conveyor system of claims 8-10, wherein the at least one magnetic mover moves by levitating or sliding on the first side of the stationary track.

12. The magnetic conveyor system of claims 8-11, wherein at least two magnetic field sensors are arranged within a distance to each other in the longitudinal direction of the stationary track and wherein the distance between the at least two of the magnetic field sensors is smaller than a length of the magnetic mover.

13. A method of determining a position of a magnetic mover on a magnetic conveyor comprising steps of:
arranging the magnetic mover on a first side of a stationary track to be moving;
generating, by the electromagnetic module, magnetic fields at least on the first side of the stationary track for moving the magnetic mover along the first side of the stationary track;
detecting, by at least one sensor arranged at a second side of the stationary track at least a magnetic field vector of magnetic fields of the magnetic mover when the mover is on a sensing range of the at least one sensor;
determining, by a processing unit, the position of the magnetic mover in relation to the stationary track based on the at least detected magnetic field vector.

14. The method of claims 13, wherein the magnetic fields are generated by coil units of the electromagnetic module.

15. The method of any of claims 13-14 wherein control phases of the electromagnetic module are changed, by a control unit arranged in connection with the processing unit, in response of the position of the magnetic mover in relation to the stationary track based on the at least detected magnetic field vector.
